# EUROPEAN PATENT SPECIFICATION

(11) **EP 1 113 050 B1**
(45) Date of publication and mention of the grant of the patent: **02.08.2006**
(21) Application number: 00128541.0
(22) Date of filing: 27.12.2000
(51) Int. Cl.: C09D 7/12, C09D 5/02, C04B 14/14

(54) **Paint material for constructional finishing and panel for constructional finishing and method of preparing these**
Anstrichmittel für Bauzwecke, Platte für Bauzwecke und Verfahren zu deren Herstellung
Peinture et panneau à des fins de construction ainsi que leur procédé de fabrication

(30) Priority: 29.12.1999 JP 37739099; 14.04.2000 JP 2000113855
(43) Date of publication of application: 04.07.2001
(73) Proprietor: TAKACHIHO CORP., Yokohama, Kanagawa 220-0042 (JP)
(72) Inventor: Shintome, Masahiro, Yokohama, Kanagawa 220-0042 (JP)
(74) Representative: TBK-Patent

(56) References cited:
- DATABASE WPI Section Ch, Week 198514 Derwent Publications Ltd., London, GB; Class A18, AN 1985-084716 XP002245182 & JP 60 036574 A (GIKOSHA KK), 25 February 1985 (1985-02-25)
- DATABASE WPI Section Ch, Week 198606 Derwent Publications Ltd., London, GB; Class A93, AN 1986-039631 XP002245183 & JP 60 260458 A (GIKENSHA KK), 23 December 1985 (1985-12-23)
- DATABASE WPI Section Ch, Week 197741 Derwent Publications Ltd., London, GB; Class A94, AN 1977-73376Y XP002245184 & JP 52 103898 A (NIPPON SYNTHETIC CHEM IND CO), 31 August 1977 (1977-08-31)
- PATENT ABSTRACTS OF JAPAN vol. 1999, no. 08 30 June 1999 & JP 11 062 053 A (TAKACHIHO) 05 March 1999

## Description

### BACKGROUND OF THE INVENTION

### 1. Field of the Invention

The present invention relates to a paint material for constructional finishing and a panel for constructional finishing which utilize volcanic ash shirasu (hereinafter referred to simply as shirasu), and a method of preparing these.

### 2. Description of the Related Art

Although a lot of studies have been made to make good use of shirasu which is an abundant resource in the field of construction, shirasu is processed for use as a construction material in most of the cases, and there has been no paint material for constructional finishing, and no panel for constructional finishing which utilize shirasu in its unprocessed original form.

Shirasu is a white sandy sediment, and more specifically, shirasu is a generic name for white porous volcanic ejecta and a secondary sediment derived therefrom, which are widely spread in the southern area of Kyushu of Japan. Shirasu is formed such that when magma having a high temperature is erupted and cooled to give rise to crystallization differentiation, main components of magma, such as SiO₂, Al₂0₃, Fe₂0₃, FeO, MgO, CaO, Na₂0, and K₂0, are crystallized as minerals through crystallization differentiation. Shirasu comprises about 30 wt.% of crystalline minerals and about 70 wt.% of amorphous volcanic glass. The amorphous volcanic glass has a porous pumice-like structure due to vigorous emission of volatile material of magma and comprises 65 to 73 wt.% of SiO₂, 12 to 16 wt.% of Al₂0₃, 2 to 4 wt.% of CaO, 3 to 4 wt.% of Na₂0, 2 to 4 wt.% of K₂0, and 1 to 3 wt.% of iron compounds. The crystalline minerals include plagioclase in a largest amount, and hypersthene, quartz, augite, magnetite and the like in small amounts.

It has been known that when shirasu is quickly heated, softening of glass contained in the shirasu and evaporation of water contained in the shirasu occur at the same time to give rise to foaming of the shirasu, thereby forming hollow spherical bodies which float on water, so-called shirasu balloons (developed by Kyushu Kogyo Gijutsu Shiken Kenkyusho in 1970). The shirasu balloons are about 30 to 600 µm in size and have features such that they are inexpensive, nonflammable, low in bulk density, high in melting point, low in thermal conductivity, low in dielectric constant, harmless, and free from emission of noxious gas and the like. Recently, the shirasu balloons of 600 to 3,000 µm in size have been produced. As main applications of the shirasu balloons, there may be mentioned a coating material for industrial use, which can be applied in a large thickness because it is lightweight. In recent years, an application has been made largely to a material for constructional use, such as a ceiling board or the like which is light weight and is not required to have so high strength. Furthermore, development of a polymeric composite material using pulverized shirasu is in progress.

A conventional plaster-finished wall and plaster wall as constructional walls include tsuchi kabe (loan-based wall) and shikkui kabe (plaster Wall). A loan-based wall comprises clay and sand incorporated therein for prevention of cracking. Furthermore, Tokyo straw or the like is incorporated therein for brown coat or middle coating (naka kabe), and humic dark-colored straw, straw bottom (nemoto wara), Manila hemp, carbon fiber or the like is incorporated therein for scratch coat or basic coating (ara kabe). A plaster wall comprises slaked line as a main component and, mixed therein, paste, fibers for plaster, straw, paper, or the like. Furthermore, diatomaceous earth which is sedimentary earth derived from algae of phytoplanktons is used as a material for a wall substrate, a material for a refractory brick or a material for wall-finishing. As a self-hardening material for a loan-based wall, there may be mentioned lime, dolonite plaster, cement, and the like as well as clay. These self-hardening materials may be incorporated into clay to enhance hardening properties.

However, in most of the above-described conventional techniques, shirasu is processed. Accordingly, there has been no commercially available constructional material which utilizes Shirasu in its unprocessed original form to make good use of the abundant resource. This is attributable to extremely high flowability of shirasu to water.

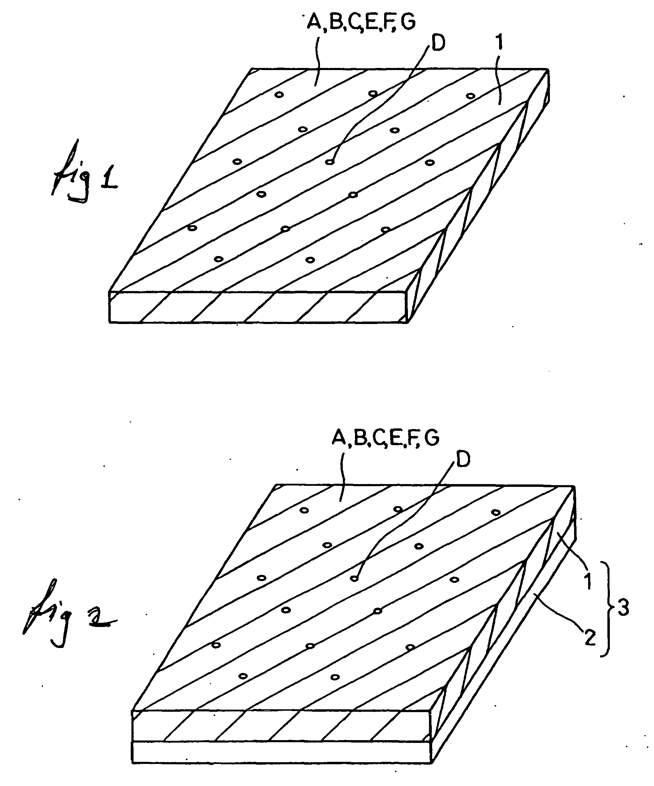

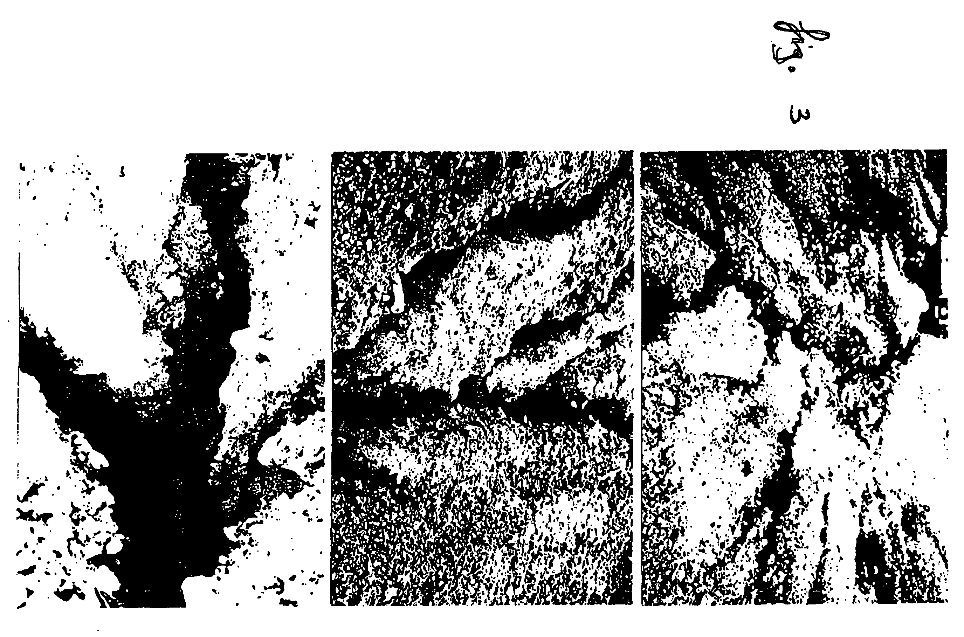

For example, the photographs of Figure 3 shows a status in which a shirasu ground surface is washed by rain water, and the like and shaven leading to the emergence of numerous deep valleys. This document proves the fact shirasu is highly flowable to water.

Although a lot of studies have been made for years to make good use of shirasu which is highly flowable to water in Kagoshima Prefecture where shirasu is originated, no commercial products have been developed yet.

The largest factor prohibiting commercialization of paint materials, and the like which utilize shirasu is cracking on the surface of shirasu when applied as a wall.

Moreover, another factor is so-called water flow phenomenon of shirasu. This is a phenomenon in which, when shirasu is mixed together with a predetermined amount of water and applied to a backing board, or the like, a large quantity of water contained in shirasu is discharged, not drying from the surface, in the process of drying of shirasu.

The above-mentioned cracking and water flow phenomena have prohibited effective use of inherent characteristics of shirasu and have prohibited shirasu from being effectively used as a paint material for constructional finishing and a panel for constructional finishing.

In view of use of a chemical substance or organic material in the conventional techniques, no substantial measures have been taken with respect to hypersensitivity to an organic compound or with respect to a health-injurious house. Moreover, substantially no use has been made of shirasu as a construction material alternative to sand which has been running short.

In addition, in the conventional techniques, it is required to take special measures with respect to, for example, protection against adverse effect on a human body due to alkalinization during construction, prevention of change of color of wood or development of stain on a wood surface at joints in or between interior posts, veranda, casings, baseboards, and the like, prevention of cracks due to treatment of joints between boards as substrates, prevention of peeling by preliminary application of a bond reinforcing agent to surfaces of boards as surface preparation of the boards as substrates.

JP-A-60 036574 discloses a composition which comprises powdery Shirasu, cement, an organic macromolecular compound and an optionally a pigment. JP-A-11 062053 discloses a composition containing 80% of dried Shirasu, 15% of cement or gypsum, 4% of a reinforcing material and 1% of a pigment colorant.

### SUMMARY OF THE INVENTION

The present invention has been made in view of the above-mentioned problems inherent in the conventional techniques. It is, therefore, an object of the present invention to provide a paint material for constructional finishing, a panel for constructional finishing and a method of preparing these, wherein volcanic ash shirasu, which is an abundant natural resource, can be effectively used in its unprocessed original form; soft or rough texture inherent in shirasu can be utilized to appear as a construction material; it can prevent measures with respect to hypersensitivity to an organic compound and with respect to a health-injurious house; shirasu can be used as a constructional material alternative to sand which has been running short; and it can permit energy savings, resource savings, free from pollution, innoxiousness, and cost savings; and the paint material for constructional finishing and the panel for constructional finishing have inorganic properties, good spreadability, colorability, fire resistance, fire-proof properties, sound-proof properties, moisture conditioning properties, antibacterial properties, heat retaining and insulating properties, deodorizing properties, air permeability, and the like.

Moreover, the present invention has resolved the so-called cracking and water flow phenomena attributable to separation of water and shirasu by incorporating highly water-retaining clay or the like and has realized commercialization of a paint material of shirasu. The present invention is highly regarded by Kyushu Kogyo Gijutsu Shiken Kenkyusho, Kagoshima-ken Kogyo Gijutsu Center (especially in Material Development Department in the center), Miyazaki-ken Kogyo Gijutsu Center, and the like.

The present invention has boosted the price of shirasu to approximately 10,000 yen per 10 kilos, which was sold at approximately 3,000 yen per 10 tons, thereby generating an extremely high market-activating effect.

In the present invention, the above-mentioned problem has been solved by using the dried shirasu, a binding agent, and a clay material in combination. Preferred means for solving the above-mentioned problem and set out below.

The above-mentioned problem has been solved by using the dried shirasu, a binding agent, a clay material, and fibers for plaster in combination.

In addition, the above-mentioned problem has been solved by using the dried shirasu, a binding agent, a clay material, fibers for plaster, and shirasu balloons in combination.

In addition, the above-mentioned problem has been solved by using the dried shirasu, a binding agent, a clay material, fibers for plaster, shirasu balloons, and a color pigment in combination.

In addition, the above-mentioned problem has been solved by using the dried shirasu, a binding agent, a clay material, fibers for plaster, shirasu balloons, a color pigment, and a bond reinforcing agent in combination.

In addition, the above-mentioned problem has been solved by using the dried shirasu in combination with any one of a binding agent, a clay material, fibers for plaster, shirasu balloons, a color pigment, or a bond reinforcing agent.

On the other hand, the above-mentioned problem has been solved by using the dried shirasu in combination with two or more of a binding agent, a clay material, fibers for plaster, shirasu balloons, a color pigment, or a bond reinforcing agent.

The above-mentioned problem has been solved by incorporating 50 to 65% of the dried shirasu, 30 to 40% of the binding agent, 3 to 10% of the clay material, 5 to 10% of shirasu balloons, 0.08 to 2% of the bond reinforcing agent, 0.01 to 3% of the color pigment, and 1 to 5% of the fibers for plaster as components.

Moreover, the above-mentioned problem has been solved by incorporating the clay material in a ratio of 1 to 1.7 parts relative to 6 parts of the dried shirasu to impart hardening properties and plasticity to the dried shirasu.

Furthermore, the above-mentioned problem has been solved by incorporating the binding agent in a ratio of 4 to 5 parts relative to 10 parts of the dried shirasu to impart hardening properties and adhesion properties to the dried shirasu.

In addition, the above-mentioned problem has been solved by screening the dried shirasu with a wire sieve or the like to collect shirasu of about 5 mm or less in diameter, and removing impurities contained therein, followed by drying.

Furthermore, the above-mentioned problem has been solved because the dried shirasu comprises mainly large grains, medium grains, and small particles.

Moreover, the above-mentioned problem has been solved because the large grains are about 2.3 mm to 1.1 mm in diameter.

Moreover, the above-mentioned problem has been solved because the medium grains are about 1.0 mm to 0.2 mm in diameter.

In addition, the above-mentioned problem has been solved because the small particles are about 0.1 mm or less in diameter.

In addition, the above-mentioned problem has been solved because the binding agent comprises cement or a gypsum material.

On the other hand, the above-mentioned problem has been solved because the binding agent comprises cement, a gypsum material, lime, a synthetic resin emulsion, and the like.

Furthermore, the above-mentioned problem has been solved because the bond reinforcing agent is a nonionic water-soluble cellulose ether, a water-soluble methyl cellulose, or hydroxymethylcellulose, hydroxypropylmethylcellulose, or the like.

Moreover, the above-mentioned problem has been solved because the clay material is a hydrous silicate mineral which exhibits plasticity when wetted and shows stiffness when dried.

The above-mentioned problem has been solved by a method of preparing a paint material for constructional finishing, comprising adding an appropriate amount of water to the dried shirasu, the binding agent, the clay material, the shirasu balloons, the bond reinforcing agent, the color pigment, and the fibers for plaster and mixing together.

The above-mentioned problem has been solved by adding an appropriate amount of water to 50 to 65% of the dried shirasu, 30 to 40% of the binding agent, 3 to 10% of the clay material, 5 to 10% of shirasu balloons, 0.08 to 2% of the bond reinforcing agent, 0.01 to 3% of the color pigment, and 1 to 5% of the fibers for plaster and mixing together.

Moreover, the above-mentioned problem has been solved by incorporating the clay material in a ratio of 1 to 1.7 parts relative to 6 parts of the dried shirasu to impart hardening properties and plasticity to the dried shirasu.

Furthermore, the above-mentioned problem has been solved by incorporating the binding agent in a ratio of 4 to 5 parts relative to 10 parts of the dried shirasu to impart hardening properties and adhesion properties to the dried shirasu.

In addition, the above-mentioned problem has been solved by screening the dried shirasu with a wire sieve or the like to collect shirasu of about 5 mm or less in diameter, and removing impurities contained therein, followed by drying.

Furthermore, the above-mentioned problem has been solved because the dried shirasu comprises mainly large grains, medium grains, and small particles.

Moreover, the above-mentioned problem has been solved because the large grains are about 2.3 mm to 1.1 mm in diameter.

Moreover, the above-mentioned problem has been solved because the medium grains are about 1.0 mm to 0.2 mm in diameter.

In addition, the above-mentioned problem has been solved because the small particles are about 0.1 mm or less in diameter.

In addition, the above-mentioned problem has been solved because the binding agent comprises cement or a gypsum material.

Furthermore, the above-mentioned problem has been solved because the binding agent comprises cement, a gypsum material, lime, a synthetic resin emulsion, and the like.

Furthermore, the above-mentioned problem has been solved because the bond reinforcing agent is a nonionic water-soluble cellulose ether, a water-soluble methyl cellulose, or hydroxymethylcellulose, hydroxypropylmethylcellulose, or the like.

Moreover, the above-mentioned problem has been solved because the clay material is a hydrous silicate mineral which exhibits plasticity when wetted and shows stiffness when dried.

The above-mentioned problem has been solved by a panel for constructional finishing, which is obtained by adding an appropriate amount of water to the dried shirasu, the bonding agent, the clay material, the shirasu balloons, the bond reinforcing agent, the color pigment, and the fibers for plaster; mixing the resultant mixture together; applying the resulting mixture onto a substrate, such as a gypsum board, veneer plywood, concrete board, mortar-applied waterproof plywood, or asbestos board; subjecting the resulting board to surface-finishing treatment according to an intended design.

The above-mentioned problem has been solved by adding an appropriate amount of water to 50 to 65 wt.% of the dried shirasu, 30 to 40% of the binding agent, 3 to 10% of the clay material, 5 to 10% of the shirasu balloons, 0.08 to 2% of the bond reinforcing agent, 0.01 to 3% of the color pigment, and 1 to 5% of the fibers for plaster; mixing the resultant mixture together; applying the resultant mixture onto a substrate, such as a gypsum board, veneer plywood, concrete board, mortar-applied waterproof plywood, or asbestos board; and subjecting the resulting board to surface-finishing treatment according to an intended design.

Moreover, the above-mentioned problem has been solved by incorporating the clay material in a ratio of 1 to 1.7 parts relative to 6 parts of the dried shirasu to impart hardening properties and plasticity to the dried shirasu.

Furthermore, the above-mentioned problem has been solved by incorporating the binding agent in a ratio of 4 to 5 parts relative to 10 parts of the dried shirasu to impart hardening properties and adhesion properties to the dried shirasu.

In addition, the above-mentioned problem has been solved by screening the dried shirasu with a wire sieve or the like to collect shirasu of about 5 mm or less in diameter, and removing impurities contained therein, followed by drying.

Furthermore, the above-mentioned problem has been solved because the dried shirasu comprises mainly large grains, medium grains, and small particles.

Moreover, the above-mentioned problem has been solved because the large grains are about 2.3 mm to 1.1 mm in diameter.

Moreover, the above-mentioned problem has been solved because the medium grains are about 1.0 mm to 0.2 mm in diameter.

In addition, the above-mentioned problem has been solved because the small particles are about 0.1 mm or less in diameter.

In addition, the above-mentioned problem has been solved because the binding agent comprises cement or a gypsum material.

On the other hand, the above-mentioned problem has been solved because the binding agent comprises cement, a gypsum material, lime, a synthetic resin emulsion, and the like.

Furthermore, the above-mentioned problem has been solved because the bond reinforcing agent is a nonionic water-soluble cellulose ether, a water-soluble methyl cellulose, or hydroxymethylcellulose, hydroxypropylmethylcellulose, or the like.

Moreover, the above-mentioned problem has been solved because the clay material is a hydrous silicate mineral which exhibits plasticity when wetted and shows stiffness when dried.

The above-mentioned problem has been solved by a method of preparing a panel for constructional finishing, comprising adding an appropriate amount of water to the dried shirasu, the bonding agent, the clay material, the shirasu balloons, the bond reinforcing agent, the color pigment, and the fibers for plaster; mixing the resultant mixture together; applying the resulting mixture onto a substrate, such as a gypsum board, veneer plywood, concrete board, mortar-applied waterproof plywood, or asbestos board; and subjecting the resulting board to surface-finishing treatment according to an intended design, followed by drying.

The above-mentioned problem has been solved by adding an appropriate amount of water to 50 to 65 wt.% of the dried shirasu, 30 to 40% of the binding agent, 3 to 10% of the clay material, 5 to 10% of the shirasu balloons, 0.08 to 2% of the bond reinforcing agent, 0.01 to 3% of the color pigment, and 1 to 5% of the fiber for plaster; mixing the resultant mixture together; applying the resulting mixture onto a substrate, such as a gypsum board, veneer plywood, concrete board, mortar-applied waterproof plywood, or asbestos board; subjecting the resulting board to surface-finishing treatment according to an intended design, followed by drying.

In addition, the above-mentioned problem has been solved because the binding agent comprises cement or a gypsum material.

On the other hand, the above-mentioned problem has been solved because the binding agent comprises cement, a gypsum material, lime, a synthetic resin emulsion, and the like.

Moreover, the above-mentioned problem has been solved by incorporating the clay material in a ratio of 1 to 1.7 parts relative to 6 parts of the dried shirasu to impart hardening properties and plasticity to the dried shirasu.

Furthermore, the above-mentioned problem has been solved by incorporating the binding agent in a ratio of 4 to 5 parts relative to 10 parts of the dried shirasu to impart hardening properties and adhesion properties to the dried shirasu.

In addition, the above-mentioned problem has been solved by screening the dried shirasu with a wire sieve or the like to collect shirasu of about 5 mm or less in diameter, and removing impurities contained therein, followed by drying.

Furthermore, the above-mentioned problem has been solved because the dried shirasu comprises mainly large grains, medium grains, and small particles.

Moreover, the above-mentioned problem has been solved because the large grains are about 2.3 mm to 1.1 mm in diameter.

Moreover, the above-mentioned problem has been solved because the medium grains are about 1.0 mm to 0.2 mm in diameter.

In addition, the above-mentioned problem has been solved because the small particles are about 0.1 mm or less in diameter.

Furthermore, the above-mentioned problem has been solved because the bond reinforcing agent is a nonionic water-soluble cellulose ether, a water-soluble methyl cellulose, or hydroxymethylcellulose, hydroxypropylmethylcellulose, or the like.

Moreover, the above-mentioned problem has been solved because the clay material is a hydrous silicate mineral which exhibits plasticity when wetted and shows stiffness when dried.

In the paint material for constructional finishing and the panel for constructional finishing and the method of preparing these, the dried shirasu is used, which is derived only from a natural material in its unprocessed original form and which contains no chemical substances. Accordingly, the material and the panel and the method are free from a chemical substance such as formaldehyde, and thus capable of providing preventive measures with respect to hypersensitivity to an organic compound and with respect to a health-injurious house. It is also possible to use the dried shirasu as a constructional material alternative to sand which has been running short, to thereby contribute to construction of health-beneficial houses. Use of the dried shirasu also contributes to activation of local industries in underpopulated communities.

Further, since the paint material for the constructional finishing of the present invention comprises 50 to 65% of the dried shirasu, 30 to 40% of the binding agent, 3 to 10% of the clay material, 5 to 10% of the shirasu balloons, 0.08 to 2% of the bond reinforcing agent, 0.01 to 3% of the color pigment, and 1 to 5% of the fibers for plaster, the paint material for constructional finishing can readily and inexpensively be prepared without using a large amount of energy such as electric power, fossil fuel energy or the like in preparation of the material or in on-site operation without causing pollution. Further, since the paint material for constructional finishing is the substantially inorganic composition, it is resistant to ultraviolet and heat and yet tolerant of natural disaster caused by, for example, fire, flood, or typhoon. In addition, the paint material for constructional finishing has air-permeability because of the pumice-like porous structure of shirasu, and accordingly, it contributes to protect a house from dew condensation or the like and exhibits moisture or humidity conditioning properties and antibacterial properties inhibiting fungal attack, or the like.

Furthermore, the binding agent functions as a binder for the dried shirasu. The clay material imparts plasticity in various steps of processing. The shirasu balloons impart light and soft texture to a finished surface of the wall material.

On the other hand, the bond reinforcing agent provides good trowel-ability and prevents the surface of the wall from flouring or becoming powder condition when the surface is dried. The fibers for plaster functions as a binder and prevents cracking of the wall.

### BRIEF DESCRIPTION OF THE DRAWINGS

Figure 1 is a perspective view of a paint material for constructional finishing which shows an embodiment of the present invention.
Figure 2 is a perspective view of a panel for constructional finishing which shows an embodiment of the present invention.
Figure 3 is photographs which show a status in which a shirasu ground surface was washed by rain water, and the like.

### DETAILED DESCRIPTION OF THE INVENTION

An embodiment of the invention is illustrated hereinafter with reference to the drawing. The paint material for constructional finishing according to the present invention comprises the dried shirasu A as a main component as shown in Figure 1. The dried shirasu A is in its unprocessed original form and is used in combination with the binding agent B and the clay material C as a paint material for constructional finishing 1. The binding agent B comprises cement, a gypsum material, lime, a synthetic resin emulsion, and the like. Preferably, two or more of the shirasu balloons D, the bond reinforcing agent E, the color pigment F, and the fibers for plaster G are additionally contained.

The paint material for constructional finishing 1 is formed by incorporating 50 to 65%, preferably 53% of the dried shirasu, 30 to 40%, preferably 35% of the binding agent B, 3 to 10%, preferably 4% of the clay material, 5 to 10%, preferably 7% of the shirasu balloons, 0.08 to 2%, preferably 1% of the bond reinforcing agent E, 0.01 to 3%, preferably 1% of the color pigment F, and 1 to 5%, preferably 2% of the fibers for plaster G.

Specifically, the dried shirasu is screened with a wire sieve or the like to collect shirasu of about 5 mm or less in diameter, and impurities contained therein are removed, and then dried. The binding agent B is a binder for the dried shirasu A, for example, a gypsum plaster, and the clay material C is used to impart plasticity in operation. The shirasu balloons D is used to impart light and soft texture to a finished surface. The bond reinforcing agent E is a vegetable paste or the like used for improving trowel-ability land for preventing a wall surface from flouring or forming powders when the wall surface is dried. The bond reinforcing agent E may be prepared by mixing 0.03 to 1%, preferably 0.05% of cotton and 0.05 to 1%, preferably 0.09% of powder of a sea vegetable, such as red algae, which is obtained by boiling down the sea vegetable. The fibers for plastering G is as a binder and crack preventive agent made of hemp fibers, thatch fibers, or the like.

When these components are formulated as preliminarily incorporated goods, 53% of the dried shirasu A, 4% of the clay material C, 7% of.the shirasu balloons D, 1% of the bond reinforcing agent E, 1% of the color pigment F, and 2% of the fibers for plaster G are preliminarily mixed and packed in a bag, a bottle, or the like. On the other hand, 35% of the binding agent B is packed in another bag or the like. The contents of the two packs are mixed together in situ, to which water is directly added thereto, and the resultant is mixed. Then, the resulting mixture is applied with a trowel or the like.

The above-mentioned gypsum plaster as the binding agent B is a self-hardening cement which has relatively high resistance to shrinkage and crack, and comprises calcined gypsum as a main component. The calcined gypsum is hemihydrated gypsum, and when mixed with water, it captures water of crystallization as a result of hydration reaction to form gypsum dihydrate. Then, when excess water other than water of crystallization evaporates, it hardens. The gypsum plaster includes a field-mix plaster which comprises calcined gypsum as a main component and a hardening retarder added thereto for regulating hardening time and a pre-mixed plaster which comprises the same components as in the field-mix plaster and additionally incorporated therein, river sand, silica sand, lightweight aggregate, calcium carbonate, or the like. These plasters are selected according to applications.

As the clay material C, there may be used a hydrous silicate mineral which exhibits plasticity when wetted and shows stiffness when dried, for example, clayey cement material containing silicon dioxide, aluminum oxide, iron oxide, magnesium oxide, calcium oxide, titanium oxide, and the like as its components. Such a clayey cement material is excellent particularly in adhesiveness, plasticity and dispersion properties, and it has a pH value of 5.9, a plasticity index of 22.1 and a particle size of 74 µm 97% pass.

As the bond reinforcing agent E, a nonionic water-soluble cellulose ether, a water-soluble methyl cellulose, or hydroxymethylcellulose, hydroxypropylmethylcellulose, or the like may be used, which is prepared by substituting in part hydrogen atoms of hydroxyl groups of natural cellulose fibers (pulp) as a starting material with a methyl group, a hydroxypropyl group, a hydroxyethyl group or the like to eliminate hydrogen bonds with a view to permitting water to readily enter between cellulose molecules to impart good water retention characteristics. In this connection, the bond reinforcing agent E is so selected as to minimize impartment of gloss to a surface of a wall material. For example, the bond reinforcing agent having a viscosity of the order of 400-4,000 mPa·s is selected.

The color pigment F may be alkali-resistant inorganic or organic pigment, and a mixture thereof, which is interposed between or adheres to particles of cement, lime, gypsum plaster, or the like to thereby develop an intended color. As the inorganic pigment, there may be mentioned titanium oxide, titanium oxide having rutile structure, chromium oxide, zinc oxide, white lead, barium sulfate, whiting (chalk), carbon, kaolin, talc, bentonite, red iron oxide, chrome yellow, yellow iron oxide, black iron oxide, ferric oxide, ultramarine, cobalt blue, cobalt violet, and zinc chromate, and silicon-treated product thereof. As the organic pigment, there may be mentioned quinacridone, Watchung Red, and dioxazine violet.

Furthermore, in order to impart hardening properties and adhesion properties to the dried shirasu A, the binding agent B is incorporated in an amount of, for example, about 4 to 5 parts relative to 10 parts of the dried shirasu A. However, if large amounts of the binding agent B and the clay material C are incorporated to result in too high viscosity, small cracks are likely to occur on a finished surface. To avoid this, the amounts of the binding agent B and the clay material C should be minimized. Since the dried shirasu (A) has particle sizes widely ranging from coarse grains to minute particles, the fibers for plaster G as reinforcing materials are used with a view to improving particle-particle bending effect to thereby prevent cracks from occurring.

To impart plasticity to the dried shirasu A, the clay material C is incorporated in an amount of, for example, 1 to 1.7 relative to 6 parts of the dried shirasu A.

The dried shirasu comprises large grains, medium grains, and small particles, the large grains being about 2.3 mm to 1.1 mm in diameter, the medium grains being about 1.0 mm to 0.2 mm in diameter, and the small particles being 0.1 mm or less in diameter. The composition of the dried shirasu is so adjusted as to contain about 5% of the large grains, about 28% of the medium grains, and about 57% of the small particles to provide a dried shirasu suitable for use in a paint material for constructional finishing and a panel for constructional finishing.

In the following, an example of an application of the present invention will be described. For example, to a premix comprising 53% of the dried shirasu A, 35% of the binding agent B, 4% of the clay material C, 7% of the shirasu balloons D, 1% of the bond reinforcing agent E, 1% of the color pigment F, and 2% of the fibers for plaster G, an appropriate amount of water is added and mixed in situ. The resultant mixture is applied by a trowel or the like. The dried shirasu advantageously has a very light gray color and thus readily colored. For example, a commercially available customary pigment for plaster may be used as the color pigment. When it is intended to provide a finished surface with a pattern, the mixture is applied in the thickness about 5 mm as a base with a trowel or the like, and after hardening proceeds to an appropriate degree, the base is subjected to scrubbing, scribing, pushing, rolling, or the like by means of a trowel, roller, or comb the like. In this embodiment, the paint material for constructional finishing (1) can be used in wide applications such as interior wall finishing material, exterior wall finishing material, earth floor, floor, ceiling, and the like. Any method of applying the paint material for constructional finishing (1) may be used, including applying the same with a trowel, spraying with a spray gun, and applying with a brush.

Furthermore, as shown in Figure 2, an appropriate amount of water is added to the dried shirasu A, the binding agent B, the clay material C, the shirasu balloons D, the bond reinforcing agent E, the color pigment F, and the fibers for plaster G and the resultant mixture is mixed together. The resulting mixture is applied onto a substrate 2, such as a gypsum board, veneer plywood, concrete board, mortar-applied waterproof plywood, or asbestos board, and the resulting board is subjected to surface-finishing treatment according to an intended design to form a panel for constructional finishing (3). If the panel for constructional finishing (3) is formed beforehand, it facilitates operation in the construction site.

The present invention is constructed as mentioned above and forms the paint material for constructional finishing (1) and the panel for constructional finishing (3) in which soft and rough texture inherent in shirasu appear by making good use of the abundant resource of volcanic ash shirasu in its unprocessed original form. Furthermore, the present invention provides preventive measures with respect to hypersensitivity to an organic compound and with respect to a health-injurious house. It is also possible to use the dried shirasu as a constructional material alternative to sand which has been running short. It can permit energy savings, resource savings, free from pollution, innoxiousness, and cost savings; and the paint material for constructional finishing and the panel for constructional finishing have inorganic properties, good spreadability, colorability, fire resistance, fire-proof properties, sound-proof properties, moisture conditioning properties, antibacterial properties, heat retaining and insulating properties, deodorizing properties, air permeability, and the like.

This is attributable to the fact that the present invention utilizes the dried shirasu A material in its unprocessed original form which is free from chemical substances and comprises natural materials. The paint material and panel according to the present invention are free from chemical substances such as formaldehyde and are capable of providing preventive measures with respect to hypersensitivity to an organic compound and with respect to a health-injurious house. It is also possible to use the dried shirasu as a constructional material alternative to sand which has been running short, to thereby contribute to construction of health-beneficial houses. Use of the dried shirasu also contributes to activation of local industries in underpopulated communities. In particular, the paint material and panel according to the present invention are approximately neutral and have almost no adverse effect on a human body during construction. Furthermore, change of color of wood or development of stain on a wood surface at joints in or between interior posts, veranda, casings, baseboards, and the like is very unlikely to occur. Cracking can be prevented simply by sticking 5cm wide craft paper for treatment of joints between boards as substrates. Cracking also can be prevented by controlling the amount of the fibers for plaster G which influences penetration and drying of water during construction. In addition, the paint material for constructional finishing (1) has no possibility of being peeled without preliminary application of a bond reinforcing agent to surfaces of boards as substrate(2).

In addition, the dried shirasu A is porous, white, and light and, therefore, is preferable as a finishing material for houses.

Furthermore, because the dried shirasu A is used in its unprocessed original form, it is easily collected and stable supply of the paint material for constructional finishing 1 is possible.

Moreover, the dried shirasu A has a fixed distribution of particles and has a good affinity for various hardening agents.

In addition, the dried shirasu is innoxious and mild with respect to a human body.

Furthermore, the paint material for the constructional finishing of the present invention preferably comprises 50 to 65% of the dried shirasu A, 30 to 40% of the binding agent B, 3 to 10% of the clay material C, 5 to 10% of the shirasu balloons D, 0.08 to 2% of the bond reinforcing agent E, 0.01 to 3% of the color pigment F, and 1 to 5% of the fibers for plaster G, since then the paint material for constructional finishing can readily and inexpensively be prepared without using a large amount of energy such as electric power, fossil fuel energy, or the like in preparation of the material or in on-site operation without causing pollution. Further, since the paint material for constructional finishing is the substantially inorganic composition, it is resistant to ultraviolet and heat and yet tolerant of natural disaster caused by, for example, fire, flood, or typhoon. In addition, the paint material for constructional finishing has air-permeability because of the pumice-like porous structure of shirasu, and accordingly, it contributes to protect a house from dew condensation or the like and exhibits moisture or humidity conditioning properties and antibacterial properties inhibiting fungal attack, or the like.

The binding agent B functions as a binder to the dried shirasu A. The clay material C is preferably a hydrous silicate mineral which exhibits plasticity when wetted and shows stiffness when dried and capable of imparting plasticity in various steps of operation. The shirasu balloons are capable of giving light and soft texture to the finishing of the surface of the wall material. Furthermore, the bond reinforcing agent E is preferably a nonionic water-soluble cellulose ether, hydroxypropylmethylcellulose, or the like and provides good trowel-ability and prevents the surface of the wall from flouring or becoming powder condition when the surface is dried to prevent to thereby prevent a person's body, cloths or the like from being smudged with dust derived from flouring. The fibers for plaster G function as a binder and thus prevents cracking of the wallboard.

When an appropriate amount of water is added to the dried shirasu A, the bonding agent B, the clay material C, the shirasu balloons D, the bond reinforcing agent E, the color pigment F, and the fibers for plaster G and mixed together and the resulting mixture is applied onto a substrate (2), such as a gypsum board, veneer plywood, concrete board, mortar-applied waterproof plywood, or asbestos board, and the resulting board is subjected to surface-finishing treatment according to an intended design to prepare the panel for constructional finishing (3), it facilitates operation in the construction site.

As mentioned above, the present invention has solved the cracking and water flow phenomena of shirasu mainly attributable to the separation of water and shirasu by incorporated highly water-retaining clay materials and the like and has realized commercialization of shirasu as a paint material for the first time. The present invention is highly regarded by Kyushu Kogyo Gijutsu Shiken Kenkyusho, Kagoshima-ken Kogyo Gijutsu Center (especially in Material Development Department in the center), Miyazaki-ken Kogyo Gijutsu Center and the like.

The present invention has boosted the price of shirasu to approximately 10,000 yen per 10 kilos, which was sold at approximately 3,000 yen per 10 tons, thereby generating an extremely high market-activating effect.

In a preferred embodiment of the invention, dried shirasu A is used in its unprocessed original form as a component and 50 to 65% of the dried shirasu A, 30 to 40% of a binding agent B, 3 to 10% of a clay material C, 5 to 10% of shirasu balloons D, 0.08 to 2% of a bond reinforcing agent E, 0.1 to 3% of a color pigment F, and 1 to 5% of fibers for plaster G are incorporated to prepare a paint material for constructional finishing (1). Furthermore, an appropriate amount of water is added to the paint material for constructional finishing (1) and mixed together. The resulting mixture is applied onto a substrate, such as a gypsum board, veneer plywood, concrete board, mortar-applied waterproof plywood, or asbestos board, and the resulting board is subjected to surface-finishing treatment according to an intended design to prepare a panel for constructional finishing (3).

## Claims

1. A paint material for constructional finishing (1), comprising dried shirasu A in an unprocessed original form, a binding agent B, and a clay material C.

2. A paint material for constructional finishing (1) according to claim 1, further comprising any one of shirasu balloons D, a bond reinforcing agent E, a color pigment F, a fiber for plaster G.

3. A paint material for constructional finishing (1) according to Claim 1 or 2, wherein 1 to 1.7 parts of the clay material C is incorporated with respect to 6 parts of the dried shirasu A.

4. A paint material for constructional finishing (1) according to any one of Claims 1 to 3, wherein 4 to 5 parts of the binding agent B is incorporated with respect to 10 parts of the dried shirasu A.

5. A paint material for constructional finishing (1) according to any one of Claims 1 to 4, wherein the diameter of the dried shirasu A is 5 mm or less.

6. A paint material for constructional finishing (1) according to any one of Claims 1 to 5, wherein the binding agent B comprises cement, a gypsum material, lime, or a synthetic resin emulsion.

7. A paint material for constructional finishing (1) according to any one of Claims 2 to 6, wherein the bond reinforcing agent E is a nonionic water-soluble cellulose ether, a water-soluble methyl cellulose, hydroxymethylcellulose, or hydroxypropylmethylcellulose.

8. A paint material for constructional finishing (1) according to any one of Claims 1 to 7, wherein the clay material C is a hydrous silicate mineral which exhibits plasticity when wetted and shows stiffness when dried.

9. A paint for constructional finishing (1), obtained by mixing water and the paint material of any one of Claims 1 to 8.

10. A panel 3 for constructional finishing (1), comprising a substrate 2 and an application layer formed by applying the paint of claim 9 onto the substrate (2).

11. A panel 3 for constructional finishing (1) according to Claim 10, wherein the substrate (2) is a gypsum board, veneer plywood, concrete board, mortar-applied waterproof plywood, or asbestos board.

12. A panel 3 for constructional finishing (1) according to Claim 10 or 11, wherein the surface-finishing treatment according to an intended design is given to the surface of the application layer.

## Patentansprüche

1. Anstrichmittel für eine bauliche Endbearbeitung (1), welches getrocknetes Shirasu A in einer unverarbeiteten, ursprünglichen Form, ein Bindemittel B und ein Lehmmaterial C umfasst.

2. Anstrichmittel für eine bauliche Endbearbeitung (1) nach Anspruch 1, das des Weiteren irgendeines von Shirasuballons D, einem bindungsverstärkenden Mittel E, einem Farbpigment F und einer Faser G für einen Putz umfasst.

3. Anstrichmittel für eine bauliche Endbearbeitung (1) nach Anspruch 1 oder 2, in das 1 bis 1,7 Teile des Lehmmaterials C bezogen auf 6 Teile des getrockneten Shirasu A eingeschlossen sind.

4. Anstrichmittel für eine bauliche Endbearbeitung (1) nach einem der Ansprüche 1 bis 3, in das 4 bis 5 Teile des Bindemittels B bezogen auf 10 Teile des getrockneten Shirasu A eingeschlossen sind.

5. Anstrichmittel für eine bauliche Endbearbeitung (1) nach einem der Ansprüche 1 bis 4, wobei der Durchmesser des getrockneten Shirasu A 5 mm oder weniger beträgt.

6. Anstrichmittel für eine bauliche Endbearbeitung (1) nach einem der Ansprüche 1 bis 5, wobei das Bindemittel B Zement, ein Gipsmaterial, Kalk oder eine synthetische Harzemulsion umfasst.

7. Anstrichmittel für eine bauliche Endbearbeitung (1) nach einem der Ansprüche 2 bis 6, wobei das bindungsverstärkende Mittel E ein nichtionischer wasserlöslicher Celluloseether, eine wasserlösliche Methylcellulose, Hydroxymethylcellulose oder Hydroxypropylmethylcellulose ist.

8. Anstrichmittel für eine bauliche Endbearbeitung (1) nach einem der Ansprüche 1 bis 7, wobei das Lehmmaterial C ein wasserhaltiges Silicatmineral ist, welches verformbar ist, wenn es feucht ist, und steif ist, wenn es trocken ist.

9. Anstrich für eine bauliche Endbearbeitung (1), welches durch Vermengen von Wasser und dem Anstrichmittel nach einem der Ansprüche 1 bis 8 erhalten ist.

10. Platte (3) für eine bauliche Endbearbeitung (1), die ein Substrat (2) und eine Applikationsschicht umfasst, welche durch Aufbringen des Anstrichs des Anspruchs 9 auf das Substrat (2) erzeugt ist.

11. Platte (3) für eine bauliche Endbearbeitung (1) nach Anspruch 10, wobei das Substrat (2) eine Gipsplatte, Furniersperrholz, eine Betonplatte, ein mit Mörtel versehenes wasserfestes Sperrholz oder eine Astbestplatte ist.

12. Platte (3) für eine bauliche Endbearbeitung (1) nach Anspruch 10 oder 11, wobei die Oberfläche der Applikationsschicht gemäß einer beabsichtigten Ausgestaltung einer Oberflächen-Endbearbeitung unterzogen ist.

## Revendications

1. Peinture pour finition de construction (1), comprenant du shirasu A séché sous une forme d'origine non traitée, un agent liant B et de l'argile C.

2. Peinture pour finition de construction (1) selon la revendication 1, comprenant en outre l'un quelconque parmi des ballons de shirasu D, un agent de renfort de liaison E, un pigment de couleur F, une fibre pour plâtre G.

3. Peinture pour finition de construction (1) selon la revendication 1 ou 2, dans laquelle 1 à 1,7 parties de l'argile C sont incorporées, pour 6 parties du shirasu A séché.

4. Peinture pour finition de construction (1) selon l'une quelconque des revendications 1 à 3, dans laquelle 4 à 5 parties de l'agent liant B sont incorporées, pour 10 parties du shirasu A séché.

5. Peinture pour finition de construction (1) selon l'une quelconque des revendications 1 à 4, dans laquelle le diamètre du shirasu A séché est de 5 mm ou moins.

6. Peinture pour finition de construction (1) selon l'une quelconque des revendications 1 à 5, dans laquelle l'agent de liant B comprend du ciment, du gypse, de la chaux ou une émulsion de résine synthétique.

7. Peinture pour finition de construction (1) selon l'une quelconque des revendications 2 à 6, dans laquelle l'agent de renfort de liaison E est un éther de cellulose non ionique soluble dans l'eau, une méthylcellulose soluble dans l'eau, de l'hydroxyméthylcellulose ou de l'hydroxypropylméthylcellulose.

8. Peinture pour finition de construction (1) selon l'une quelconque des revendications 1 à 7, dans laquelle l'argile C est un silicate hydraté minéral qui présente une plasticité lorsqu'il est mouillé et qui présente une rigidité lorsqu'il est séché.

9. Peinture pour finition de construction (1) obtenu par mélange d'eau et de la peinture selon l'une quelconque des revendications 1 à 8.

10. Panneau 3 pour finition de construction (1), comprenant un substrat (2) et une couche d'application formée par application de la peinture de la revendication 9 sur le substrat (2).

11. Panneau 3 pour finition de construction (1) selon la revendication 10, dans lequel le substrat (2) est une plaque de gypse, un contre-plaqué de placage, une plaque de béton, un contre-plaqué hermétique à l'eau appliqué sur du mortier ou une plaque d'amiante.

12. Panneau 3 pour finition de construction (1) selon la revendication 10 ou 11, dans lequel le traitement de finition de surface selon une conception prévue est réalisé sur la surface de la couche d'application.
